(19) Europäisches Patentamt
European Patent Office
Office européen des brevets

(11) **EP 3 654 067 B1**

(12) **FASCICULE DE BREVET EUROPEEN**

(45) Date de publication et mention
de la délivrance du brevet:
**13.07.2022 Bulletin 2022/28**

(21) Numéro de dépôt: **19209006.6**

(22) Date de dépôt: **13.11.2019**

(51) Classification Internationale des Brevets (IPC):
**G01T 1/17** *(2006.01)* **G01T 7/00** *(2006.01)*

(52) Classification Coopérative des Brevets (CPC):
**G01T 1/171; G01T 7/005**

(54) **PROCÉDÉ DE CALIBRATION D'UNE FONCTION SPECTRALE RÉSULTANT D'UN DÉTECTEUR DE RAYONNEMENT IONISANT**

VERFAHREN ZUR KALIBRIERUNG EINER SPEKTRALFUNKTION, DIE VON EINEM DETEKTOR VON IONISIERENDER STRAHLUNG ERZEUGT WIRD

METHOD FOR CALIBRATING A SPECTRAL FUNCTION RESULTING FROM AN IONISING RADIATION DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2018 FR 1860592**

(43) Date de publication de la demande:
**20.05.2020 Bulletin 2020/21**

(73) Titulaire: **Commissariat à l'Énergie Atomique et aux Énergies Alternatives
75015 Paris (FR)**

(72) Inventeurs:
• **OUVRIER-BUFFET, Patrice**
38054 Grenoble cedex 09 (FR)
• **PAULUS, Caroline**
38054 Grenoble cedex 09 (FR)

(74) Mandataire: **Le Goaller, Christophe
Innovation Competence Group
310 avenue Berthelot
69372 Lyon Cedex 08 (FR)**

(56) Documents cités:
**WO-A1-2011/138631 US-A1- 2006 013 359**

• **MANNELLA N ET AL: "Correction of non-linearity effects in detectors for electron spectroscopy", ARXIV.ORG, CORNELL UNIVERSITY LIBRARY, 201 OLIN LIBRARY CORNELL UNIVERSITY ITHACA, NY 14853, 18 décembre 2004 (2004-12-18), XP080179035, DOI: 10.1016/J.ELSPEC.2004.03.009**
• **TAGUCHI KATSUYUKI ET AL: "Modeling the performance of a photon counting x-ray detector for CT: Energy response and pulse pileup effects", MEDICAL PHYSICS, AIP, MELVILLE, NY, US, vol. 38, no. 2, 1 février 2011 (2011-02-01), pages 1089-1102, XP012145053, ISSN: 0094-2405, DOI: 10.1118/1.3539602**

**Description**

**DOMAINE TECHNIQUE**

Le domaine technique de l'invention est la caractérisation d'un objet par irradiation à l'aide d'une source d'irradiation X ou gamma et la formation d'une image spectrale d'un rayonnement transmis par l'objet.

**ART ANTERIEUR**

La caractérisation d'un objet par irradiation à l'aide d'un rayonnement électromagnétique ionisant, par exemple un rayonnement X ou gamma, permet d'estimer la composition de l'objet.

Une telle caractérisation peut être réalisée à des fins de diagnostic médical, de contrôle non destructif dans le domaine industriel, ou encore pour la détection de matériaux dangereux ou illicites, par exemple dans des portiques de contrôle d'individus, de type portiques d'aéroport, ou dans le contrôle de bagages. Durant ce type de caractérisation, une source d'irradiation émet un rayonnement d'irradiation se propageant vers un objet. Un détecteur détecte un rayonnement transmis par l'objet, c'est-à-dire un rayonnement émis par la source et s'étant propagé à travers l'objet.

La caractérisation d'un objet peut être effectuée à partir d'une fonction spectrale caractéristique de l'objet. La fonction spectrale caractéristique de l'objet peut être :

- le spectre du rayonnement transmis par l'objet ;
- ou le spectre d'une atténuation, par l'objet, du rayonnement émis par la source d'irradiation;
- ou le spectre d'un rayonnement diffusé par l'objet.

Pour ce type de caractérisation, il est usuel d'utiliser des détecteurs pixelisés, spatialement et spectralement résolus. Ce type de détecteur permet de former une image spectrale du spectre du rayonnement transmis par l'objet. Par image spectrale, on entend une image dans différents canaux d'énergie. Une image spectrale est formée par la juxtaposition de différents pixels. A chaque pixel est associé un spectre du rayonnement transmis par l'objet. Ce spectre comporte plusieurs canaux, chaque canal étant représentatif d'une bande d'énergie. Un tel spectre peut comporter des dizaines voire des centaines de canaux. Chaque pixel d'un détecteur pixellisé forme un détecteur élémentaire, ayant sa propre fonction de réponse spectrale.

La fonction de réponse spectrale d'un détecteur correspond à la réponse d'un détecteur vis-à-vis d'un rayonnement détecté. Du fait de la fonction de réponse spectrale, un spectre d'un rayonnement, mesuré par un détecteur, est généralement différent du spectre réel du rayonnement auquel est exposé le détecteur. Les documents Manella, « Correction of non-linearity effects in detectors for electron spectroscopy » et US2006/0013359 décrivent des procédés de correction de non linéarités de détecteurs en exposant un détecteur à différents niveaux d'irradiation.

L'objectif de l'invention, présentée ci-après, est de déterminer et de prendre en compte une fonction de réponse spectrale d'un détecteur, cette fonction de réponse étant déterminée expérimentalement.

**EXPOSE DE L'INVENTION**

Un premier objet de l'invention est un procédé de calibration d'un dispositif d'analyse d'un objet, tel que décrit dans la revendication 1, le dispositif d'analyse comportant:

- une source d'irradiation, configurée pour émettre un rayonnement ionisant lorsqu'elle est alimentée par un courant d'alimentation ;
- un détecteur, configuré pour détecter un rayonnement ionisant et à en former un spectre d'énergie, le spectre d'énergie étant défini dans plusieurs bandes d'énergies ;

le procédé de calibration comportant les étapes suivantes :

i) alimentation de la source d'irradiation par un courant d'alimentation nominal d'intensité nominale et formation, par le détecteur, d'un spectre de plein flux nominal;

ii) alimentation de la source d'irradiation par un courant d'alimentation de rang $n$, dont l'intensité est égale à $n$ fois l'intensité nominale, $n$ étant un réel strictement positif et strictement inférieur à 1, et formation, par le détecteur, d'un spectre de plein flux de rang $n$;

iii) comparaison du spectre de plein flux nominal au spectre de plein flux de rang $n$, de façon à obtenir une atténuation spectrale de rang $n$, la comparaison étant effectuée en appliquant une fonction de comparaison au spectre de plein flux nominal et au spectre de plein flux de rang $n$ ;

iv) dans au moins une bande d'énergie, comparaison de la valeur de l'atténuation spectrale de rang *n* avec une valeur d'atténuation théorique, obtenue à partir du réel *n*, et détermination d'un facteur de correction associé à la valeur de l'atténuation spectrale et à la bande d'énergie.

Le procédé peut comporter l'une des caractéristiques suivantes, prise isolément ou selon les combinaisons techniquement réalisables :

- Lors de l'étape iv), l'atténuation théorique est obtenue en appliquant la fonction de comparaison à l'entier 1 et au réel *n*.
- La fonction de comparaison compare deux grandeurs et comporte :

    - un ratio entre deux grandeurs comparées ;
    - ou un logarithme d'un ratio entre deux grandeurs comparées.

- La fonction de comparaison peut être égale à l'opposé du logarithme des deux grandeurs comparées.
- Le procédé comporte une répétition des étapes ii) à iv) en prenant en compte différentes valeurs de *n*, de façon à obtenir, pour chaque valeur de *n*, un ensemble de facteurs de correction respectivement définis pour au moins une bande d'énergie, et de préférence dans différentes bandes d'énergie. Le procédé peut alors comporter, dans une même bande d'énergie, une interpolation entre deux facteurs de correction respectivement associés à deux rangs différents ou à deux valeurs d'atténuation différentes.

Un deuxième objet de l'invention est un procédé d'analyse d'un objet, à l'aide d'un dispositif d'analyse , tel que décrit dans la revendication 6, comportant :

- une source d'irradiation, configurée pour émettre un rayonnement ionisant lorsqu'elle est alimentée par un courant d'alimentation;
- un détecteur, configuré pour détecter un rayonnement ionisant et à en former un spectre d'énergie, le spectre d'énergie étant défini dans plusieurs bandes d'énergies ;

le procédé d'analyse comportant les étapes suivantes :

a) irradiation de l'objet par la source d'irradiation, la source d'irradiation étant alimentée par un courant d'alimentation nominal d'intensité nominale ;
b) détection, par le détecteur, d'un rayonnement transmis par l'objet et formation d'un spectre d'énergie du rayonnement détecté ;
c) prise en compte d'un spectre de plein flux, formé par le détecteur en l'absence d'objet disposé entre la source et le détecteur, la source étant alimentée par le courant d'alimentation nominal;
d) dans au moins une bande d'énergie, sélection d'un facteur de correction résultant du procédé de calibration selon le premier objet de l'invention ;
e) définition d'une fonction spectrale représentative de l'objet, dans au moins la bande d'énergie, la fonction spectrale étant obtenue à partir :

- du spectre formé lors de l'étape b) ;
- et du spectre de plein flux pris en compte lors de l'étape c ) ;
- et du facteur de correction sélectionné lors de l'étape d) dans au moins la bande d'énergie.

Lors de l'étape e), la fonction spectrale représentative de l'objet peut être une fonction d'atténuation spectrale de l'objet, comportant une fonction de comparaison définie à partir du spectre formé lors de l'étape b) et du spectre de plein flux pris en compte lors de l'étape c), la fonction de comparaison étant multipliée par le facteur de correction sélectionné lors de l'étape d). La fonction de comparaison peut comporter un ratio ou le logarithme d'un ratio. Elle peut être égale à l'opposé du logarithme du ratio. Le spectre plein flux peut avoir été mesuré en l'absence de l'objet. Il peut également s'agir d'un spectre mémorisé.
Lors de l'étape e), la fonction spectrale représentative de l'objet peut être établie à partir d'un ratio entre :

- le spectre formé lors de l'étape b), affecté d'un exposant égal au facteur de correction sélectionné lors de l'étape d) ;
- le spectre de plein flux formé lors de l'étape c), affecté d'un exposant égal au facteur de correction sélectionné lors de l'étape d) diminué d'une unité ;

L'étape c) peut comporter une mesure du spectre de plein flux, sans objet disposé entre la source d'irradiation et le détecteur.

L'étape d) peut comporter une prise en compte d'une atténuation spectrale, l'atténuation spectrale comportant un ratio entre :

- le spectre mesuré lors de l'étape b) ;
- et le spectre de plein flux pris en compte lors de l'étape c) ;

de telle sorte que le facteur de correction est sélectionné en fonction de la valeur, dans la bande d'énergie considérée, de l'atténuation spectrale. L'atténuation spectrale peut notamment comporter le logarithme du ratio. Elle peut être égale à l'opposé du logarithme du ratio.

L'étape d) peut comporter une mesure de l'atténuation spectrale, à partir d'un ratio entre :

- le spectre mesuré lors de l'étape b) ;
- et le spectre de plein flux pris en compte lors de l'étape c).

De façon alternative, l'atténuation spectrale est déterminée à priori.

Un troisième objet de l'invention est un dispositif de caractérisation d'un objet, tel que décrit dans la revendication 13, comportant :

- une source d'irradiation, configurée pour émettre un rayonnement électromagnétique ionisant ;
- un support, destiné à recevoir l'objet, de telle sorte que l'objet soit disposé entre la source d'irradiation et le détecteur ;
- un détecteur, configuré pour détecter un rayonnement électromagnétique ionisant et à former un spectre du rayonnement détecté ;
- un processeur, configuré pour recevoir les spectres formés par le détecteur et pour mettre en oeuvre les étapes c) à e) d'un procédé selon le deuxième objet de l'invention, le processeur étant relié à une mémoire comportant au moins un facteur de correction déterminé pour au moins une bande d'énergie.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente les principaux composants d'un dispositif selon l'invention.

La figure 1B représente un dispositif selon l'invention dans une configuration selon laquelle un spectre de plein flux de la source est mesuré.

La figure 2A montre un exemple d'un spectre de plein flux et d'un spectre du rayonnement transmis par un objet et détecté par un détecteur.

La figure 2B montre un exemple de fonction spectrale d'atténuation, obtenue à partir d'un ratio entre le spectre de plein flux et le spectre du rayonnement transmis par l'objet, ces spectres étant représentés sur la figure 2A.

La figure 3A montre un exemple de fonction spectrale d'atténuation d'un objet. La figure 3B montre un autre exemple de fonction spectrale d'atténuation du même objet. Sur la figure 3B, l'objet est irradié par un rayonnement plus intense que sur la figure 3A. La comparaison des figures 3A et 3B permet d'observer la variabilité de la réponse du détecteur.

La figure 4A illustre les principales étapes de procédés faisant l'objet de l'invention.

La figure 4B montre une fonction spectrale d'atténuation mesurée et une fonction spectrale d'atténuation théorique, cette dernière prenant la forme d'une droite horizontale.

La figure 4C montre, pour différentes valeurs d'un réel n, des fonctions spectrales d'atténuation respectivement mesurées et théoriques.

La figure 4D représente une évolution de la valeur de facteurs de correction en fonction de l'énergie.

La figure 5A montre des fonctions spectrales d'atténuation d'une plaque d'aluminium, respectivement sans mettre en œuvre l'invention et en mettant en œuvre l'invention. La figure 5B montre des fonctions spectrales d'atténuation d'une plaque de polyéthylène, respectivement sans mettre en œuvre l'invention et en mettant en œuvre l'invention.

La figure 6A représente les spectres d'un rayonnement transmis par une plaque de polyéthylène, respectivement mesuré et obtenu en mettant en œuvre d'invention. La figure 6B représente les spectres d'un rayonnement transmis par une plaque de polyoxyméthylène, respectivement mesuré et obtenu en mettant en œuvre d'invention.

**EXPOSE DE MODES DE REALISATION PARTICULIERS**

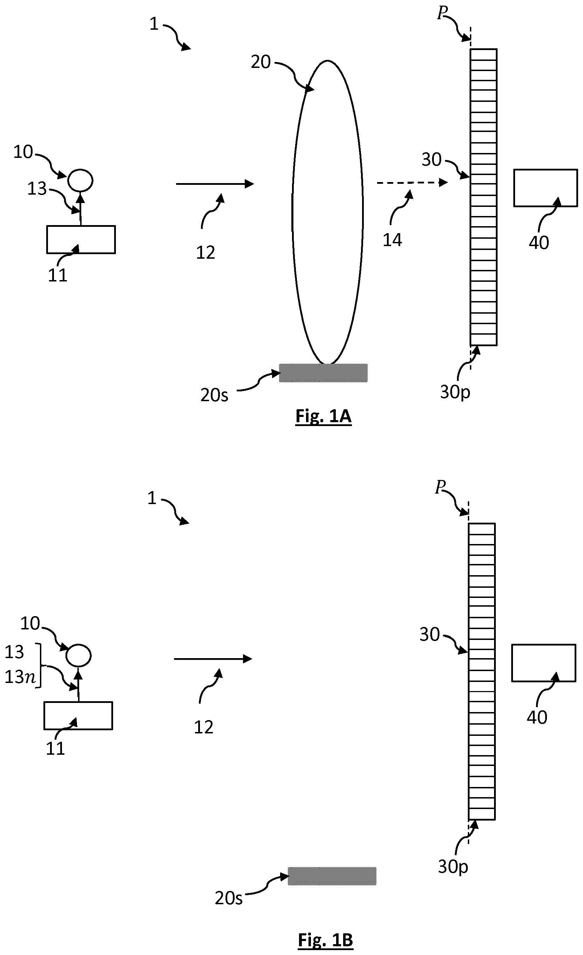

On a représenté, sur la figure 1A, un dispositif 1 de caractérisation d'un objet 20 permettant une mise en œuvre de l'invention. Sur chacune de ces figures, le dispositif 1 comporte une source d'irradiation 10 et un détecteur pixelisé 30p. Le dispositif comporte également un support 20s, configuré pour recevoir un objet, de telle sorte que lorsque l'objet 20 est disposé sur le support 20s, il est interposé entre la source d'irradiation 10 et le détecteur pixelisé 30p.

La source d'irradiation 10 est configurée pour émettre un rayonnement électromagnétique ionisant 12, dit rayonnement incident, vers l'objet 20, ce dernier étant interposé entre la source d'irradiation 10 et le détecteur pixelisé 30p. Le détecteur pixelisé 30p comporte des détecteurs élémentaires 30 prenant la forme de pixels agencés selon un plan de détection *P*. Le détecteur pixelisé 30p comporte p pixels 30, où p est un entier naturel. Les pixels peuvent s'étendre selon une ligne, mais en général, ils s'étendent selon une matrice régulière bidimensionnelle. Dans la suite de la description, un détecteur 30 désigne un des pixels du détecteur pixelisé 30p.

La source d'irradiation 10 est configurée pour être activée à l'aide d'une alimentation 11. L'alimentation adresse un courant électrique d'alimentation 13 pour alimenter la source d'irradiation 10. De façon usuelle, la source d'irradiation est un tube générateur de rayons X, dont l'anode est soumise à une tension de polarisation V dépendant du courant d'alimentation 13. La tension de polarisation V détermine la bande spectrale d'énergie des rayons X émis par la source d'irradiation. L'intensité *I* du courant d'alimentation 13 conditionne l'intensité du rayonnement X émis par la source, c'est-à-dire la quantité de rayons X émis par unité de temps. La source d'irradiation 10 émet le rayonnement incident 12 selon une bande spectrale d'énergie s'étendant généralement selon plusieurs dizaines voire centaines de keV.

La bande spectrale d'énergie du rayonnement émis par la source peut être discrétisée en différents canaux d'énergie, ou bandes d'énergies, le terme bande d'énergie correspondant à l'acronyme anglais energy bin. Dans un canal d'énergie, l'intensité du rayonnement généré par la source est reliée, de préférence par une relation proportionnelle, à l'intensité *I* du courant d'alimentation 13. L'intensité du rayonnement émis par la source correspond, dans un canal d'énergie, à une quantité de photons X émise par unité de temps, dans la bande d'énergie.

L'objet 20 peut être un tissu biologique vivant, par exemple une partie du corps d'un animal ou d'un être humain. Le dispositif 1 est alors un dispositif d'imagerie médicale ou un portique de contrôle d'aéroport. L'objet peut également être une pièce industrielle ou un bagage, le dispositif étant alors utilisé à des fins de contrôle non destructif.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou y.

L'objet 20, irradié par le rayonnement incident 12, transmet à chaque pixel 30 un rayonnement 14, dit rayonnement transmis, ou rayonnement atténué. Chaque pixel 30 est un détecteur spectrométrique comportant :

- un matériau détecteur, apte à interagir avec les photons du rayonnement incident au détecteur. Le matériau détecteur peut être de type scintillateur ou, de préférence, un matériau semi-conducteur compatible avec une utilisation à la température ambiante, de type CdTe, CdZnTe ;
- un circuit électronique, apte à générer un signal dont l'amplitude dépend, et est de préférence proportionnelle, à l'énergie déposée par chaque photon interagissant dans le matériau détecteur ;
- un circuit de spectrométrie, apte à établir un spectre en énergie, noté *S*, des signaux détectés pendant une période temporelle, dite période d'acquisition.

Le dispositif de caractérisation 1 comporte également une unité de traitement 40 permettant la mise en œuvre des opérations de traitement décrites ci-après. L'unité de traitement 40 peut comprendre un microprocesseur et/ou des microcontrôleurs électroniques. Elle comporte une mémoire, dans laquelle sont stockés des facteurs de correction décrits par la suite.

Sous l'effet de l'irradiation par le rayonnement incident 12, l'objet 20 transmet un rayonnement 14, dit rayonnement transmis, vers chaque détecteur 30. Chaque détecteur 30 forme un spectre en énergie *S* du rayonnement transmis 14. Le terme spectre en énergie *S* correspond à un histogramme de l'amplitude des signaux détectés au cours de la période d'acquisition du spectre. Une relation entre l'amplitude *A* et l'énergie *E* peut être obtenue par une fonction d'étalonnage en énergie *g* telle que $E = g(A)$, selon des principes connus de l'homme du métier. Un spectre d'énergie *S* est donc un vecteur, dont chaque terme $S(k)$ représente une quantité de rayonnement détecté par le pixel $30_i$ dans

une plage d'énergie $E_k \pm \dfrac{\partial E}{2}$, avec $\partial E$ étant la largeur spectrale de chaque canal *k*. *k* désigne le rang du canal, avec $1 < k \leq K$, *K* désignant le nombre de canaux du spectre.

Sur la figure 1B, on a représenté le dispositif de caractérisation tel que précédemment décrit, en l'absence d'objet entre la source d'irradiation 10 et le détecteur pixelisé 30p. Selon cette configuration, chaque détecteur 30 est exposé directement au rayonnement 12 émis par la source. Chaque détecteur 30 permet la formation d'un spectre $S_0$, dit spectre "de plein flux", du rayonnement 12 émis par la source.

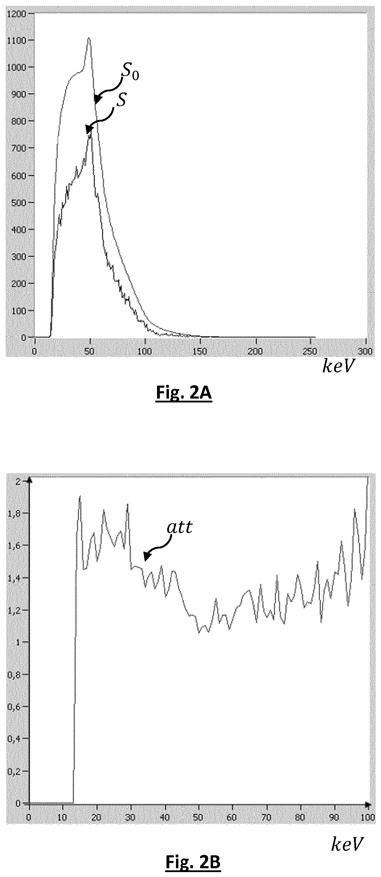

La figure 2A représente un exemple de spectre de plein flux $S_0$ ainsi qu'un exemple de spectre $S$ d'un rayonnement 14 transmis par l'objet. Lors des acquisitions respectives du spectre $S$ et du spectre de plein flux $S_0$, la source d'irradiation 10 est soumise à un même courant d'alimentation $I$, dit courant nominal. Sur la figure 2A, l'axe des abscisses représente des canaux d'énergies (unité : keV), tandis que l'axe des ordonnées correspond à une quantité de photons détectés, éventuellement par unité de temps, dans chaque canal. Afin de quantifier l'atténuation *att,* par l'objet 20, du rayonnement 12 émis par la source, il est usuel de procéder à une comparaison entre le spectre transmis $S$ et le spectre de plein flux $S_0$. La comparaison comporte généralement un ratio $\frac{S}{S_0}$. L'atténuation peut être exprimée sous la forme du ratio $\frac{S}{S_0}$ ou, de façon plus usuelle, sous selon l'expression :

$$att = -ln\left(\frac{S}{S_0}\right) (1)$$

L'atténuation est une fonction spectrale, au sens où elle est définie selon plusieurs canaux d'énergies, à chaque canal d'énergie étant associée une bande d'énergie. La figure 2B montre une atténuation obtenue en appliquant l'expression (1) aux spectres $S$ et $S_0$ représentés sur la figure 2A.

Il est usuel de définir un seuil bas en énergie, en deçà duquel les spectres formés par un détecteur 30 ne sont pas considérés comme représentatifs d'une information fiable. Ce seuil peut être ajusté, mais il est usuellement inférieur à 20 keV.

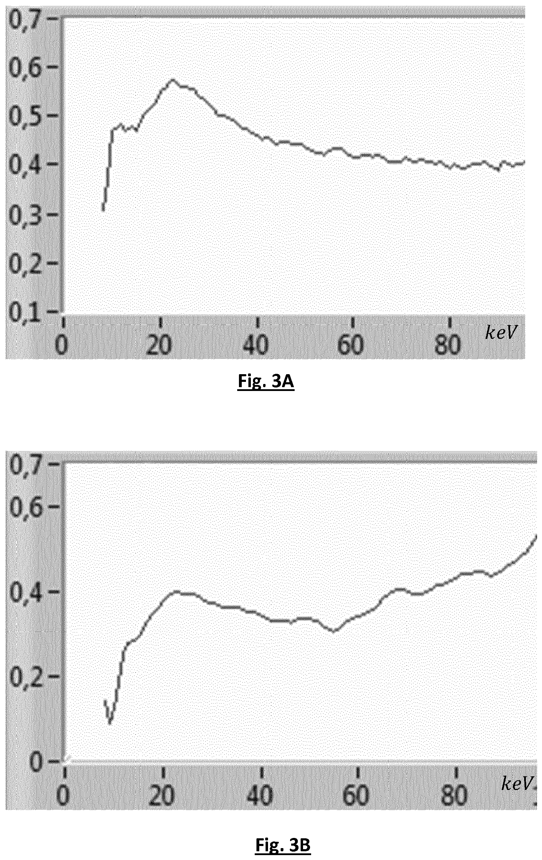

Les figures 3A et 3B représentent des atténuations spectrales obtenues en disposant un objet 20 formé de PMMA (Polyméthacrylate de méthyle) d'épaisseur 15 mm. Entre les figures 3A et 3B, l'intensité du courant d'alimentation de la source a été modifiée, de telle sorte que la quantité de rayonnement 14 atteignant chaque pixel soit respectivement de 200 000 photons par seconde par pixel et de 1.5 10$^6$ photons par seconde et par pixel. On observe que :

- en dessous du seuil bas de 20 keV, l'atténuation mesurée n'est pas représentative d'une réalité physique ;

- lorsque l'irradiation générée par la source est élevée (figure 3B), on observe une déformation de l'atténuation dans les canaux correspondant aux énergies élevées, en particulier au-delà de 60 keV. Or, les figures 3A et 3B représentent l'atténuation d'un même objet : l'atténuation devrait être similaire. L'augmentation de l'atténuation aux fortes énergies, lorsque le niveau d'irradiation augmente, est en grande partie attribuée à des phénomènes d'empilements (pile up), connus par l'homme du métier. Un empilement correspond à une détection simultanée, ou dans un intervalle de temps suffisamment court, de 2 photons, de telle sorte que le détecteur considère une détection d'un seul photon d'une énergie égale à la somme d'énergie des deux photons.

- aux faibles niveaux d'énergie, typiquement entre les canaux 20 et 40, l'atténuation subit également une déformation, cette dernière étant attribuée, au moins en partie, à des partages de charge, c'est-à-dire à la détection, par plusieurs pixels adjacents, de charges résultant d'une interaction d'un photon dans le détecteur.

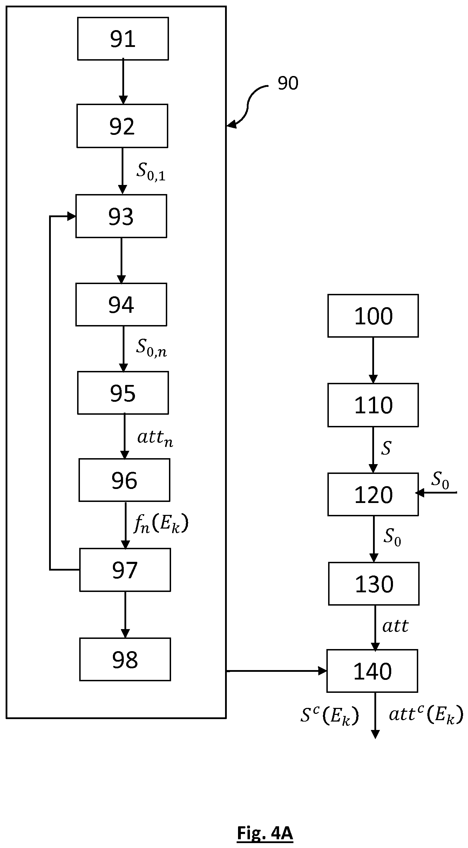

Les figures 3A et 3B illustrent le fait que la réponse d'un détecteur varie, selon l'énergie, en fonction de l'intensité du rayonnement détecté. Les inventeurs proposent un procédé permettant de prendre une meilleure prise en compte de la réponse du détecteur, de façon à limiter les déformations spectrales constatées en fonction du niveau d'irradiation du rayonnement incident au détecteur. Les principales étapes du procédé sont décrites en lien avec la figure 4A.

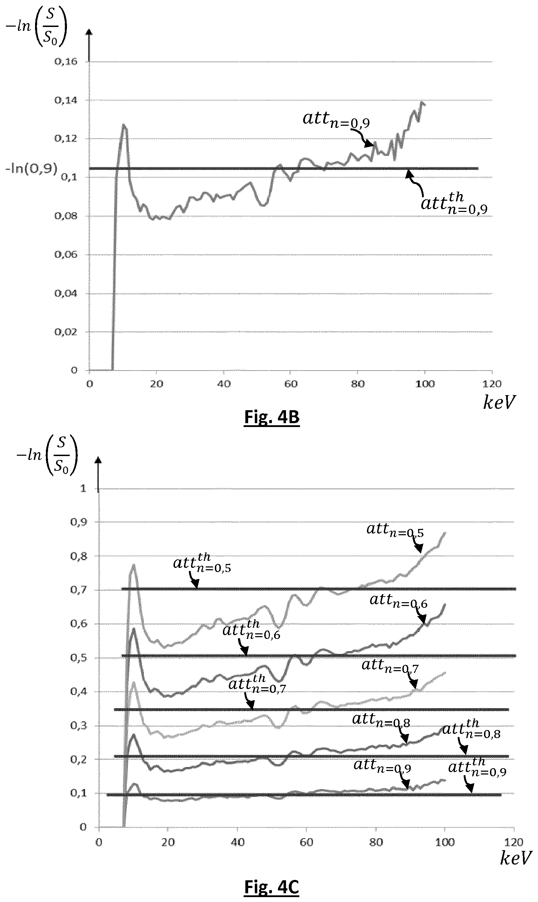

Un élément important du procédé est la prise en compte de la variabilité de réponse du détecteur lorsque ce dernier est exposé à différents niveaux d'irradiation. Sur la figure 4B, on a représenté une atténuation spectrale obtenue en mesurant:

- un spectre de plein flux $S_{0;1}$, dit spectre de plein flux nominal, formé en exposant directement le détecteur à la source, cette dernière étant alimentée par un courant nominal 13 d'intensité nominale $I$ ; Le spectre de plein flux nominal correspond au spectre $S_0$ précédemment décrit en lien avec la figure 2A ;

- un spectre de plein flux d'ordre $n$ noté $S_{0;n}$, c'est-à-dire formé en exposant le directement le détecteur à la source, cette dernière étant alimentée par un courant 13$n$, d'intensité $nI$, où $n$ est un entier naturel strictement positif et strictement inférieur à 1 : $0 < n < 1$. Dans le cas de la figure 4B, $n = 0.9$. Lorsque $n = 1$, l'intensité du roucant d'alimentation correspond à l'intensité nominale *I*.

Sur la figure 4B, on a représenté :

- la fonction spectrale d'atténuation *att_n*, d'ordre *n*=0.9, telle que : $att_n = -ln\left(\frac{S_{0;n=0,9}}{S_{0;1}}\right)$ ;

- une droite d'équation $y = -\ln\left(\frac{0.9}{1}\right) = -\ln(0,9)$ . Cette droite correspond à une atténuation théorique $att^{th}_{n=0.9}$ que l'on devrait obtenir, en considérant une relation de proportionnalité entre le spectre de plein flux nominal $S_{0,1}$ et le spectre de plein flux d'ordre 0.9 noté $S_{0;0,9}$.

$$att^{th}_{n=0.9} = -ln\left(\frac{0.9 S_{0;1}}{S_{0;1}}\right).$$

Si la réponse du détecteur 30 était parfaite, l'atténuation *att_n* mesurée devrait être, pour *n* = 0.9, confondue avec l'atténuation théorique $att^{th}_{n=0.9}$ , c'est-à-dire confondue avec la droite *y* = 0.9. Or, entre 20 keV et 60 keV, la fonction spectrale d'atténuation $att_{n=0.9}$ est inférieure à la valeur théorique de - *ln*(0.9). Au delà de 60 keV, la fonction spectrale d'atténuation $att_{n=0.9}$ est supérieure à la valeur théorique de - *ln*(0.9).

Le procédé décrit ci-dessous vise à corriger les imperfections de la réponse spectrale du détecteur. Les étapes suivantes sont décrites pour un détecteur 30. Il peut s'agir d'un unique détecteur 30 ou d'un détecteur formant un pixel d'un détecteur pixelisé 30p.

Le procédé comporte une phase de calibration 90, comportant les étapes suivantes :

Etape 91 : irradiation du détecteur 30, selon une configuration de plein flux nominal, par la source d'irradiation 10. La source d'irradiation est alors alimentée par un courant d'alimentation 13 d'intensité nominale *I*.

Etape 92 : acquisition, par le détecteur 30, d'un spectre de plein flux nominal $S_{0;1}$, formé en exposant directement le détecteur 30 à la source d'irradiation 10.
Dans la notation $S_{0;1}$, l'indice 0 représente le fait qu'il s'agit d'un spectre de plein flux. L'indice 1 représente le fait que la source d'irradiation 10 est alimentée par un courant nominal d'alimentation 13 d'intensité nominale *I*.

Etape 93 : irradiation du détecteur 30, par la source d'irradiation 10, la source d'irradiation étant alors alimentée par un courant d'alimentation 13*n* d'intensité *nI,* où *n* est un réel strictement compris entre 0 et 1 avec 0 < *n* < 1. La notation *nI* signifie un produit de *n* par l'intensité nominale *I*.

Etape 94 : acquisition, par le détecteur 30, d'un spectre de plein flux d'ordre $S_{0;n}$, formé en exposant directement le détecteur 30 à la source 10 alimentée par le courant d'alimentation 13n d'intensité *nI*.

Etape 95 : formation d'une fonction spectrale d'atténuation *att_n*, en effectuant une comparaison entre le spectre de plein flux nominal $S_{0;1}$ et le spectre de plein flux d'ordre *n* $S_{0;n}$. La comparaison prend généralement la forme d'un ratio. Dans cet exemple, l'atténuation est telle que :

$$att_n = -ln\left(\frac{S_{0;n}}{S_{0;1}}\right)$$

Sur la figure 4C, on a représenté des fonctions spectrales d'atténuation *att_n* pour différentes valeurs de *n*, respectivement égales à 0.9 (voir également figure 4B), 0.8, 0.7, 0.6 et 0.5. Sur la figure 4C, l'axe des abscisses correspond à l'énergie et l'axe des ordonnées correspond à l'atténuation *att_n* pour chaque énergie. Plus la valeur de *n* est élevée, plus l'atténuation correspondante *att_n* est faible.

Etape 96 : comparaison à une atténuation théorique $att^{th}_n$ . Dans cette étape, la fonction d'atténuation spectrale, telle que formée lors de l'étape 95, à partir des mesures respectives de $S_{0;1}$ et $S_{0;n}$, est comparée à une fonction d'atténuation théorique $att_n^{th}$ , calculée selon (1) et en utilisant le fait que $S_{0;n} = n \times S_{0;1}$. Ainsi,

$$att_n^{th} = -ln\left(\frac{nS_{0;1}}{S_{0;1}}\right) = -\ln\left(\frac{n}{1}\right) = -\ln(n). \ (2)$$

On a représenté, sur la figure 4C, des droites y = -ln($n$) pour $n$ respectivement égal à correspondant à 0.9, 0.8, 0.7, 0.6 et 0.5.

Au cours de cette étape, on effectue, à une ou plusieurs énergies $E_k$, une comparaison, par exemple sous la forme d'un ratio, entre l'atténuation $att_n$ calculée lors de l'étape 95 et l'atténuation théorique $att_n^{th}$ . Chaque comparaison

$$f_n(E_k) = \frac{att_n^{th}(E_k)}{att_n(E_k)} = \frac{-\ln(n)}{att_n(E_k)}$$

permet d'établir, à chaque énergie $E_k$, un facteur de correction (3). On dispose ainsi, pour chaque énergie $E_k$, d'un facteur de correction $f_n(E_k)$ associé à la valeur de $n$.

Le terme énergie $E_k$ correspond à une plage d'énergie $E_k \pm \frac{\partial E}{2}$ associée à chaque canal $k$, comme précédemment décrit.

On observe qu'en appliquant le facteur de correction $f_n(E_k)$ à la fonction spectrale d'atténuation déterminée définie en (1), on obtient une fonction spectrale d'atténuation $att_n$ corrigée correspondant à l'atténuation théorique $att_n^{th}$ .

Etape 97 : Réitération. Réitération des étapes 93 à 96 en modifiant la valeur de $n$. On peut par exemple réitérer les étapes 93 à 96 pour différentes valeurs de $n$ strictement comprises entre 0 et 1, par exemple par incréments réguliers, ou par décades, comme expliqué par la suite.

On obtient ainsi un ensemble de $N \times K$ facteurs de correction $f_n(E_k)$, $N$ désignant le nombre de valeurs de $n$ considérées et $K$ désignant le nombre de canaux d'énergie considérés.

Etape 98 : interpolation. En utilisant deux coefficients de correction $f_n(E_k)$ respectivement associées à deux valeurs différentes de $n$, et définies pour une même énergie $E_k$, on peut effectuer une interpolation, par exemple une interpolation linéaire, de façon à estimer des coefficients de correction $f_{n'}(E_k)$ pour des valeurs de $n'$ n'ayant pas fait l'objet des étapes 93 à 96. L'interpolation peut également permettre d'obtenir une fonction spectrale d'atténuation interpolée $att_{n'}$ à partir de deux fonctions spectrales d'atténuation $att_n$. L'étape 98 est facultative.

A l'issue de la phase de calibration 90, on dispose d'un ensemble de facteurs de correction $f_n(E_k)$, à chaque facteur de correction étant associée une valeur de $n$ et une valeur d'énergie $E_k$ (ou un canal d'énergie $k$). Ces facteurs de correction sont stockés dans une mémoire reliée au microprocesseur 40.

Lorsqu'on dispose d'un détecteur pixelisé 30p, comportant un nombre p de pixels 30, la phase de calibration peut être effectuée pour chaque pixel. On obtient ainsi, pour chaque pixel, un ensemble de facteurs de correction.

Les étapes 100 à 140, décrites par la suite, montrent une utilisation des facteurs de correction $f_n(E_k)$ ($f_{n'}(E_k)$) ou pour corriger une fonction spectrale d'atténuation mesurée.

Etape 100 : disposition d'un objet 20 entre la source d'irradiation 10 et le détecteur 30.

Etape 110 : irradiation de l'objet par la source d'irradiation 10, alimentée par le courant nominal d'alimentation 13, et acquisition d'un spectre $S$ du rayonnement 14 transmis par l'objet et détecté par le détecteur 30. L'intensité $I$ du courant nominal 13 correspond à l'intensité $I$ du courant d'alimentation de la source 10 lors de l'étape 91.

Etape 120 : prise en compte d'un spectre de plein flux $S_0$ correspondant au spectre formé par le détecteur 30 en l'absence d'objet entre la source et le détecteur 30. Le spectre de plein flux peut faire l'objet d'une acquisition spécifique ou peut avoir été mémorisé. Il est considéré comme correspondant au spectre de plein flux nominal $S_{0;1}$ acquis lors de l'étape 91 de la phase de calibration. Ainsi, $S_0 = S_{0;1}$.

Etape 130 : formation de la fonction spectrale d'atténuation. Comparaison du spectre formé lors de l'étape 110 et du spectre de plein flux $S_0$ pour former une fonction spectrale d'atténuation. La fonction spectrale d'atténuation est identique à celle considérée lors de l'étape 95 décrite ci-avant. Dans cet exemple, la fonction spectrale d'atténuation est :

$$att = -ln\left(\frac{S}{S_0}\right) (4)$$

Etape 140 : Correction de la fonction spectrale d'atténuation *att*. Dans cette étape, la fonction d'atténuation est corrigée dans au moins un canal d'énergie $E_k$ en utilisant les facteurs de correction $f_n(E_k)$ définis à cette énergie. La correction est effectuée en utilisant le facteur de correction $f_n(E_k)$ correspondant à une valeur de *n*, notée $n_k$ telle que $att_{n_k}(E_k)$ soit le plus proche possible de $att(E_k)$.

Autrement dit

$$n_k = arg\min_n |(att_n(E_k) - att(E_k))| (5)$$

La correction permet d'obtenir, au canal d'énergie $E_k$, une fonction d'atténuation corrigée $att^c$ telle que $att^c(E_k)$ = $f_{n_k}(E_k) \times att(E_k)$. (6)

L'étape 140 peut être effectuée dans tout ou partie des canaux d'énergie $E_k$ dans lesquels la fonction spectrale d'atténuation *att* est définie.

La phase de calibration 90 peut être réalisée avant ou après les étapes 100 à 130.

Dans les étapes 91, 93 et 100, il est préférable que la tension à laquelle est soumise la source d'irradiation soit constante, ou sensiblement constante, par exemple à ± 5% près.

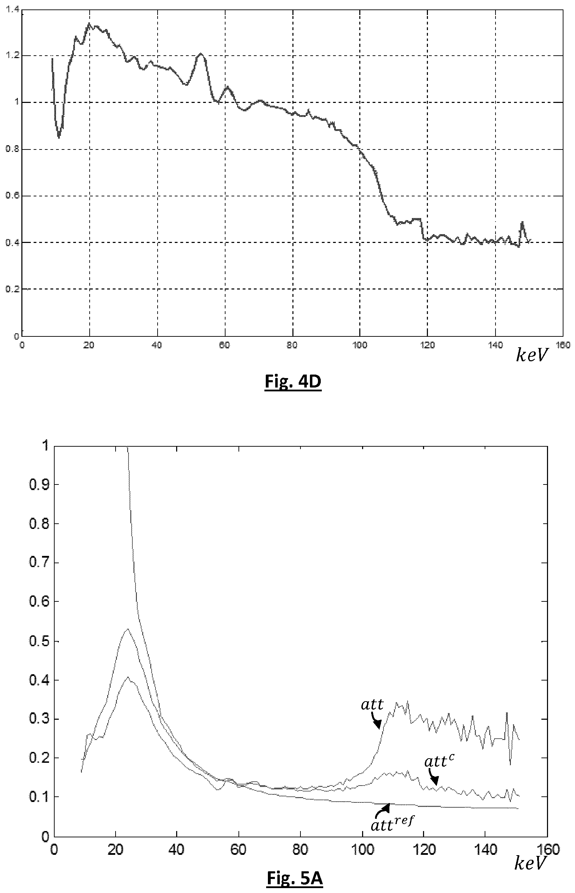

On a représenté, sur la figure 4D, une courbe représentant une évolution de coefficients de correction $f_n(E)$ (axe des ordonnées) en fonction de l'énergie *E*. Ces facteurs de correction ont été déterminés pour *n* = 0.9. En cohérence avec les observations précédemment décrites, les coefficients de correction sont :

- supérieurs à 1 entre 20 keV et 60 keV : ils tendent à augmenter l'atténuation mesurée *att,* de façon à prendre en compte le fait que l'atténuation mesurée *att* est inférieure à l'atténuation théorique, du fait de la réponse du détecteur, comme expliqué en lien avec la figure 3B ;
- puis inférieurs à 1 au-delà de 60 keV : ils tendent à abaisser l'atténuation *att,* de façon à de façon à prendre en compte le fait que l'atténuation mesurée est supérieure à l'atténuation théorique, comme expliqué en lien avec la figure 3B.

Les inventeurs ont observé que pour une plage d'atténuation déterminée, les facteurs de correction peuvent ne pas subir de variation significative. Par exemple, sur une plage d'une décade (ou d'une demi-décade), on peut utiliser des facteurs de correction calculés dans ladite décade (ou dans ladite demi-décade). Ainsi, il est possible de calculer des facteurs de correction pour *n* = 0.001 puis pour *n* = 0.01, puis pour *n* = 0.1 et enfin pour *n* = 0.9. Par exemple, les valeurs de coefficients de correction $f_n(E)$ représentées sur la figure 4D peuvent être considérées comme valables sur une plage de valeurs de *n* comprise entre 0.5 et 1, voire entre 0.1 et 1.

La figure 5A représente un exemple de mise en oeuvre de l'invention. On a mesuré un spectre d'atténuation *att* d'une plaque d'aluminium d'épaisseur 2 mm. On a utilisé un tube générateur de rayon X dont l'anode a été portée à un potentiel nominal V = 110 kV. On a utilisé un détecteur pixelisé 30p, dont chaque pixel 30 est un cristal de CdTe de surface 800 μm x 800 μm. La figure 5A montre :

- une courbe de l'atténuation *att* mesurée en fonction de l'énergie ;
- une courbe de l'atténuation corrigée $att^c$ en mettant en oeuvre l'invention
- une courbe de référence, représentant une atténuation théorique $att^{ref}$, établie à partir de valeurs connues de l'atténuation de l'aluminium.

On observe que la correction permet de rapprocher significativement l'atténuation corrigée $att^c$ de l'atténuation théorique $att^{ref}$.

Ainsi, le procédé permet d'obtenir une fonction spectrale, en l'occurrence l'atténuation, représentative de l'objet 20. La fonction spectrale obtenue prend en compte la réponse du détecteur, par le biais des facteurs de correction.

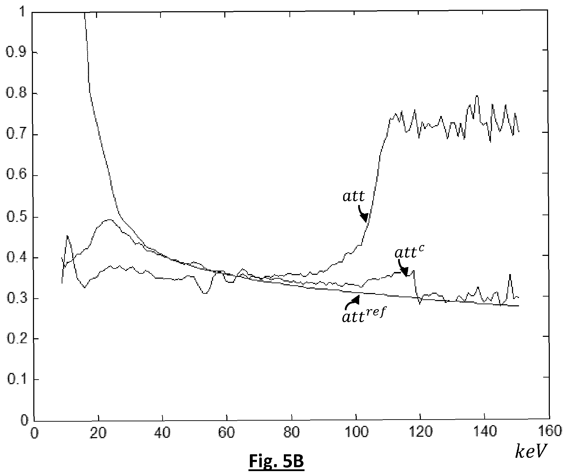

La figure 5B illustre un autre exemple d'application, en mettant en oeuvre une plaque de polyéthylène d'épaisseur 2 cm. On observe à nouveau l'efficacité de la correction, l'atténuation corrigée $att^c$ étant nettement plus proche de l'atténuation de référence que ne l'est l'atténuation mesurée $att^{ref}$.

Le recours aux facteurs de correction peut également permettre d'effectuer une correction du spectre $S$ du rayonnement 14 transmis par l'objet 20, de manière à obtenir un spectre corrigé $S^c$. Pour cela, on utilise le fait que le spectre corrigé est tel que :

$$att^c(E_k) = -\ln\left(\frac{S^c(E_k)}{S_0(E_k)}\right) \quad (7)$$

et

$$att^c(E_k) = f_{n_k}(E_k) \times att(E_k) = -f_{n_k}(E_k)\ln\left(\frac{S(E_k)}{S_0(E_k)}\right) = -\ln\left[\frac{S(E_k)}{S_0(E_k)}\right]^{f_{n_k}(E_k)} \quad (8)$$

En combinant (7) et (8), on a :

$$-\ln\left(\frac{S^c(E_k)}{S_0(E_k)}\right) = -\ln\left[\frac{S(E_k)}{S_0(E_k)}\right]^{f_{n_k}(E_k)} \quad (9),$$

donc:

$$\left(\frac{S^c(E_k)}{S_0(E_k)}\right) = \left[\frac{S(E_k)}{S_0(E_k)}\right]^{f_{n_k}(E_k)} \quad (10)$$

d'où :

$$S^c(E_k) = \frac{S(E_k)^{f_{n_k}(E_k)}}{S_0(E_k)^{f_{n_k}(E_k)-1}} \quad (11).$$

Ainsi, moyennant la connaissance des facteurs de correction $f_{n_k}(E_k)$, obtenus à partir de (6), ou d'un a priori sur l'atténuation, on peut corriger, énergie par énergie, un spectre mesuré $S$ pour obtenir un spectre corrigé $S^c$. Ainsi, le procédé permet d'obtenir une fonction spectrale, en l'occurrence le spectre corrigé, représentative de l'objet 20. La fonction spectrale obtenue prend en compte la réponse du détecteur, par le biais des facteurs de correction.

La correction peut supposer un calcul effectif de l'atténuation $att$ en plusieurs valeurs d'énergie de façon à déterminer, en chaque énergie, le facteur de correction à utiliser. Une autre possibilité est d'utiliser un a priori sur la valeur de l'atténuation, et d'utiliser cet a priori pour définir les facteurs de correction à utiliser.

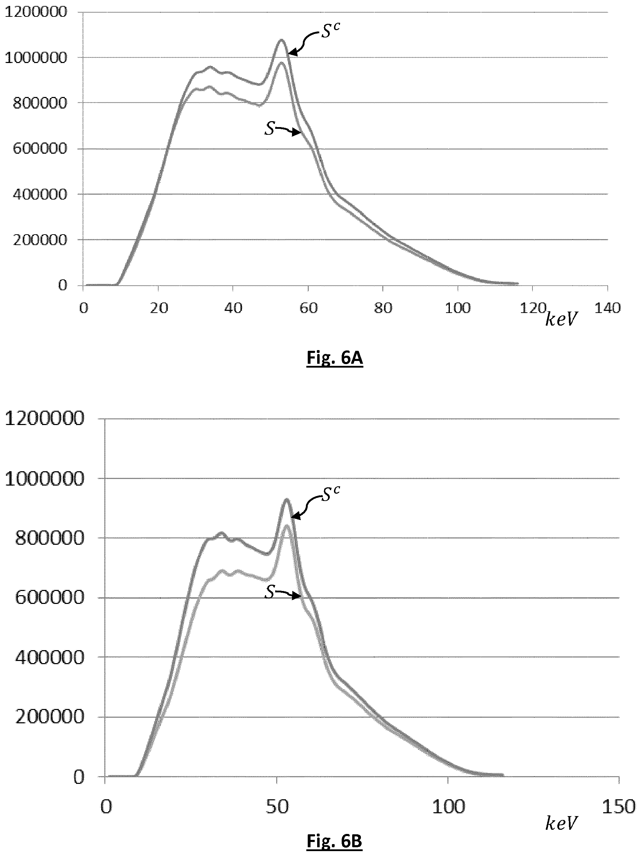

Les figures 6A et 6B illustrent des exemples d'application de l'invention. Sur les figures 6A et 6B, on a représenté un spectre $S$ d'un rayonnement respectivement transmis par une plaque de polyéthylène d'épaisseur 2 mm et une plaque de polyoxyméthylène d'épaisseur 2 cm. Sur chaque figure, on a représenté le spectre $S$ ainsi que le spectre corrigé $S^c$ suite à une mise en œuvre de l'invention.

L'invention pourra être utilisée pour caractériser un objet, l'objet pouvant être une partie du corps d'un individu, à des fins de diagnostic, ou un objet non vivant, à des fins de contrôle. Il peut par exemple s'agir du contrôle d'un bagage, ou d'un déchet nucléaire.

**Revendications**

1. Procédé de calibration d'un dispositif (1) d'analyse d'un objet, le dispositif d'analyse comportant:

   - une source d'irradiation (10), configurée pour émettre un rayonnement ionisant (12) lorsqu'elle est alimentée par un courant d'alimentation ;
   - un détecteur (30), configuré pour détecter un rayonnement ionisant et à en former un spectre d'énergie ($S$), le spectre d'énergie étant défini dans plusieurs bandes d'énergies ($E_k$);

   le procédé de calibration comportant les étapes suivantes :

i) alimentation de la source d'irradiation (10) par un courant d'alimentation nominal (13) d'intensité nominale ($I$) et formation, par le détecteur, d'un spectre de plein flux nominal ($S_{0;1}$);

ii) alimentation de la source d'irradiation par un courant d'alimentation de rang $n$ (13$n$), dont l'intensité ($nI$) est égale à $n$ fois l'intensité nominale, $n$ étant un réel strictement positif et strictement inférieur à 1, et formation, par le détecteur, d'un spectre de plein flux de rang $n$ ($S_{0;n}$);

iii) comparaison du spectre de plein flux nominal au spectre de plein flux de rang $n$, de façon à obtenir une atténuation spectrale de rang $n$ ($att_n$), la comparaison étant effectuée en appliquant une fonction de comparaison

$$\left(-ln\left(\frac{S_{0;n}}{S_{0;1}}\right)\right)$$

au spectre de plein flux nominal et au spectre de plein flux de rang $n$ ;

iv) dans au moins une bande d'énergie ($E_k$), comparaison de la valeur de l'atténuation spectrale de rang $n$ ($att_n$) avec une valeur d'atténuation théorique $\left(att_n^{th}\right)$, obtenue à partir du réel $n$, et détermination d'un facteur de correction ($f_n(E_k)$) associé à la valeur de l'atténuation spectrale et à la bande d'énergie.

2. Procédé selon la revendication 1, dans lequel lors de l'étape iv), l'atténuation théorique est obtenue en appliquant la fonction de comparaison $\left(-ln\left(\frac{n}{1}\right)\right)$ à l'entier 1 et au réel $n$.

3. Procédé selon l'une quelconque des revendications précédentes, dans lequel la fonction de comparaison compare deux grandeurs et comporte :

 - un ratio entre deux grandeurs comparées ;
 - ou un logarithme d'un ratio entre deux grandeurs comparées.

4. Procédé selon l'une quelconque des revendications précédentes, comportant une répétition des étapes ii) à iv) en prenant en compte différentes valeurs de $n$, de façon à obtenir, pour chaque valeur de $n$, un ensemble de facteurs de correction ($f_n(E_k)$) respectivement définis pour au moins une bande d'énergie ($E_k$).

5. Procédé selon la revendication 4, comportant, dans une même bande d'énergie ($E_k$), une interpolation entre deux facteurs de correction respectivement associés à deux rangs différents ou à deux valeurs d'atténuation différentes.

6. Procédé d'analyse d'un objet, à l'aide d'un dispositif d'analyse comportant :

 - une source d'irradiation (10), configurée pour émettre un rayonnement ionisant (12) lorsqu'elle est alimentée par un courant d'alimentation (13) ;
 - un détecteur (30), configuré pour détecter un rayonnement ionisant et à en former un spectre d'énergie, le spectre d'énergie étant défini dans plusieurs bandes d'énergies ;

le procédé d'analyse comportant les étapes suivantes :

 a) irradiation de l'objet (20) par la source d'irradiation, la source d'irradiation étant alimentée par un courant d'alimentation nominal (13) d'intensité nominale ($I$) ;
 b) détection, par le détecteur (30), d'un rayonnement (14) transmis par l'objet et formation d'un spectre d'énergie ($S$) du rayonnement détecté ;
 c) prise en compte d'un spectre de plein flux ($S_0$), formé par le détecteur en l'absence d'objet disposé entre la source et le détecteur, la source étant alimentée par le courant d'alimentation nominal (13) ;
 d) dans au moins une bande d'énergie ($E_k$), sélection d'un facteur de correction ($f_{n_k}(E_k)$) résultant du procédé de calibration selon l'une quelconque des revendications 1 à 5 ;
 e) définition d'une fonction spectrale représentative de l'objet ($att^c(E_k), S^c(E_k)$), dans au moins la bande d'énergie, la fonction spectrale étant obtenue à partir :

  - du spectre ($S$) formé lors de l'étape b) ;
  - et du spectre de plein flux ($S_0$) pris en compte lors de l'étape c) ;
  - et du facteur de correction ($f_{n_k}(E_k)$) sélectionné lors de l'étape d) dans au moins la bande d'énergie.

7. Procédé selon la revendication 6, dans lequel lors de l'étape e), la fonction spectrale représentative de l'objet est une fonction d'atténuation spectrale de l'objet ($att^c(E_k)$), comportant une fonction de comparaison définie à partir du spectre ($S$) formé lors de l'étape b) et du spectre de plein flux ($S_0$) pris en compte lors de l'étape c), la fonction de comparaison étant multipliée par le facteur de correction ($f_{n_k}(E_k)$) sélectionné lors de l'étape d).

8. Procédé selon la revendication 6, dans lequel lors de l'étape e), la fonction spectrale représentative de l'objet ($S^c$) est établie à partir d'un ratio entre :

   - le spectre ($S$) formé lors de l'étape b), affecté d'un exposant égal au facteur de correction ($f_{n_k}(E_k)$) sélectionné lors de l'étape d) ;
   - le spectre de plein flux ($S_0$) pris en compte lors de l'étape c), affecté d'un exposant égal au facteur de correction ($f_{n_k}(E_k)$) sélectionné lors de l'étape d) diminué d'une unité.

9. Procédé selon l'une quelconque des revendications 6 à 8, dans lequel l'étape c) comporte une mesure du spectre de plein flux ($S_0$), sans objet disposé entre la source d'irradiation (10) et le détecteur (30).

10. Procédé selon l'une quelconque des revendications 6 à 9, dans lequel l'étape d) comporte une prise en compte d'une atténuation spectrale *(att)*, l'atténuation spectrale comportant un ratio entre :

    - le spectre (S) formé lors de l'étape b) ;
    - et le spectre de plein flux ($S_0$) pris en compte lors de l'étape c) ;

    de telle sorte que le facteur de correction est sélectionné en fonction de la valeur, dans la bande d'énergie considérée, de l'atténuation spectrale.

11. Procédé selon la revendication 10, dans lequel l'étape d) comporte une mesure de l'atténuation spectrale *(att),* à partir d'un ratio entre :

    - le spectre (S) formé lors de l'étape b) ;
    - et le spectre de plein flux ($S_0$) pris en compte lors de l'étape c).

12. Procédé selon la revendication 10, dans lequel l'atténuation spectrale est déterminée à priori.

13. Dispositif de caractérisation d'un objet (20) comportant :

    - une source d'irradiation (10), configurée pour émettre un rayonnement électromagnétique ionisant ;
    - un support (20s), destiné à recevoir l'objet, de telle sorte que l'objet soit disposé entre la source d'irradiation et le détecteur ;
    - un détecteur (30), configuré pour détecter un rayonnement électromagnétique ionisant et à former un spectre (S) du rayonnement détecté ;
    - un processeur (40), configuré pour recevoir les spectres formés par le détecteur et pour mettre en œuvre les étapes c) à e) d'un procédé selon l'une quelconque des revendications 6 à 12, le processeur étant relié à une mémoire comportant au moins un facteur de correction ($f_{n_k}(E_k)$) déterminé pour au moins une bande d'énergie, le facteur de correction étant déterminé selon l'une quelconque des revendications 1 à 5.

**Patentansprüche**

1. Verfahren zur Kalibrierung einer Vorrichtung (1) zur Analyse eines Objekts, wobei die Analysevorrichtung umfasst:

   - eine Strahlungsquelle (10), die dazu ausgestaltet ist, eine ionisierende Strahlung (12) auszusenden, wenn sie mit einem Versorgungsstrom versorgt wird;
   - einen Detektor (30), der dazu ausgestaltet ist, eine ionisierende Strahlung zu detektieren und daraus ein Energiespektrum (S) zu bilden, wobei das Energiespektrum in mehreren Energiebändern ($E_k$) definiert ist;

   wobei das Kalibrierungsverfahren die folgenden Schritte umfasst:

   i) Versorgen der Strahlungsquelle (10) mit einem Nennversorgungstrom (13) mit Nennintensität (*I*) und Bilden, durch den Detektor, eines Nenn-Vollfluss-Spektrums ($S_{0;1}$);

ii) Versorgen der Strahlungsquelle mit einem Versorgungsstroms des Rangs $n$ ($13n$), dessen Intensität ($nI$) gleich dem $n$-Fachen der Nennintensität ist, wobei $n$ eine reelle Zahl ist, die strikt positiv und strikt kleiner als 1 ist, und Bilden, durch den Detektor, eines Vollfluss-Spektrums des Rangs $n$ ($S_{0;n}$);

iii) Vergleichen des Nenn-Vollfluss-Spektrums mit dem Vollfluss-Spektrum des Rangs $n$, so dass eine spektrale Dämpfung des Rangs $n$ ($att_n$) erhalten wird, wobei der Vergleich durchgeführt wird, indem eine Vergleichsfunktion $\left(-\ln\left(\frac{S_{0;n}}{S_{0;1}}\right)\right)$ auf das Nenn-Vollfluss-Spektrum und auf das Vollfluss-Spektrum des Rangs $n$ angewandt wird;

iv) in mindestens einem Energieband ($E_k$), Vergleichen des Werts der spektralen Dämpfung des Rangs $n$ ($att_n$) mit einem Wert für die theoretische Dämpfung $\left(att_n^{th}\right)$, der anhand der reellen Zahl $n$ erhalten wird, und Bestimmen eines Korrekturfaktors ($f_n(E_k)$), der dem Wert der spektralen Dämpfung und dem Energieband zugewiesen wird.

2. Verfahren nach Anspruch 1, bei dem beim Schritt iv) die theoretische Dämpfung erhalten wird, indem die Vergleichsfunktion $\left(-\ln\left(\frac{n}{1}\right)\right)$ auf die ganze Zahl 1 und auf die reelle Zahl $n$ angewandt wird.

3. Verfahren nach einem der vorhergehenden Ansprüche, bei dem die Vergleichsfunktion zwei Größen vergleicht und umfasst:

   - einen Quotienten zwischen zwei verglichenen Größen;
   - oder einen Logarithmus eines Quotienten zwischen zwei verglichenen Größen.

4. Verfahren nach einem der vorhergehenden Ansprüche, das eine Wiederholung der Schritte ii) bis iv) unter Berücksichtigung verschiedener Werte von $n$ umfasst, so dass, für jeden Wert von $n$, eine Menge von Korrekturfaktoren ($f_n(E_k)$) erhalten wird, die jeweils für mindestens ein Energieband ($E_k$) definiert sind.

5. Verfahren nach Anspruch 4, das, in demselben Energieband ($E_k$), eine Interpolation zwischen zwei Korrekturfaktoren umfasst, die jeweils zwei unterschiedlichen Rängen oder zwei unterschiedlichen Dämpfungswerten zugewiesen sind.

6. Verfahren zur Analyse eines Objekts mithilfe einer Analysevorrichtung, die umfasst:

   - eine Strahlungsquelle (10), die dazu ausgestaltet ist, eine ionisierende Strahlung (12) auszusenden, wenn sie mit einem Versorgungsstrom (13) versorgt wird;
   - einen Detektor (30), der dazu ausgestaltet ist, eine ionisierende Strahlung zu detektieren und daraus ein Energiespektrum zu bilden, wobei das Energiespektrum in mehreren Energiebändern definiert ist;

   wobei das Analyseverfahren die folgenden Schritte umfasst:

   a) Bestrahlen des Objekts (20) mit der Strahlungsquelle, wobei die Strahlungsquelle mit einem Nennversorgungsstrom (13) mit Nennintensität ($I$) versorgt wird;
   b) Detektieren, durch den Detektor (30), einer Strahlung (14), die vom Objekt durchgelassen wird, und Bilden eines Energiespektrums ($S$) der detektierten Strahlung;
   c) Berücksichtigen eines Vollfluss-Spektrums ($S_0$), das vom Detektor bei Nichtvorhandensein eines zwischen der Quelle und dem Detektor angeordneten Objekts gebildet wird, wobei die Quelle mit dem Nennversorgungsstrom (13) versorgt wird;
   d) in mindestens einem Energieband ($E_k$) Auswählen eines Korrekturfaktors ($f_{n_k}(E_k)$), der aus dem Kalibrierverfahren nach einem der Ansprüche 1 bis 5 resultiert;
   e) Definieren einer für das Objekt repräsentativen spektralen Funktion ($att^c(E_k), S^c(E_k)$) in dem mindestens einen Energieband, wobei die spektrale Funktion erhalten wird anhand von:

      - dem Spektrum ($S$), das beim Schritt b) gebildet wird;
      - und dem Vollfluss-Spektrum ($S_0$), das beim Schritt c) berücksichtigt wird;

- und dem Korrekturfaktor ($f_{n_k}(E_k)$), der beim Schritt d) in dem mindestens einen Energieband gewählt wird.

7.  Verfahren nach Anspruch 6, bei dem beim Schritt e) die für das Objekt repräsentative spektrale Funktion eine spektrale Dämpfungsfunktion des Objekts ($att^c(E_k)$) ist, umfassend eine Vergleichsfunktion, die anhand des beim Schritt b) gebildeten Spektrums ($S$) und des beim Schritt c) berücksichtigten Vollfluss-Spektrums ($S_0$) definiert wird, wobei die Vergleichsfunktion mit dem beim Schritt d) gewählten Korrekturfaktor ($f_{n_k}(E_k)$) multipliziert wird.

8.  Verfahren nach Anspruch 6, bei dem beim Schritt e) die für das Objekt repräsentative spektrale Funktion ($S^c$) anhand eines Quotienten erstellt wird zwischen:

    - dem beim Schritt b) gebildeten Spektrum (5), das mit einem Exponenten gleich dem beim Schritt d) gewählten Korrekturfaktor ($f_{n_k}(E_k)$) behaftet ist;
    - dem beim Schritt c) berücksichtigten Vollfluss-Spektrum ($S_0$), das mit einem Exponenten gleich dem beim Schritt d) gewählten Korrekturfaktor ($f_{n_k}(E_k)$), vermindert um eine Einheit, behaftet ist.

9.  Verfahren nach einem der Ansprüche 6 bis 8, bei dem der Schritt c) eine Messung des Vollfluss-Spektrums ($S_0$), ohne zwischen der Strahlungsquelle (10) und dem Detektor (30) angeordnetem Objekt, umfasst.

10. Verfahren nach einem der Ansprüche 6 bis 9, bei dem der Schritt d) eine Berücksichtigung einer spektralen Dämpfung *(att)* umfasst, wobei die spektrale Dämpfung einen Quotienten umfasst zwischen:

    - dem Spektrum ($S$), das beim Schritt b) gebildet wird;
    - und dem Vollfluss-Spektrum ($S_0$), das beim Schritt c) berücksichtigt wird;

    so dass der Korrekturfaktor in Abhängigkeit von dem Wert, in dem betrachteten Energieband, der spektralen Dämpfung gewählt wird.

11. Verfahren nach Anspruch 10, bei dem der Schritt d) eine Messung der spektralen Dämpfung *(att)* anhand eines Quotienten umfasst zwischen:

    - dem Spektrum ($S$), das beim Schritt b) gebildet wird;
    - und dem Vollfluss-Spektrum ($S_0$), das beim Schritt c) berücksichtigt wird.

12. Verfahren nach Anspruch 10, bei dem die spektrale Dämpfung im Vorhinein bestimmt wird.

13. Vorrichtung zur Charakterisierung eines Objekts (20), umfassend:

    - eine Strahlungsquelle (10), die dazu ausgestaltet ist, eine ionisierende elektromagnetische Strahlung auszusenden;
    - einen Träger (20s), der dazu bestimmt ist, das Objekt aufzunehmen, so dass das Objekt zwischen der Strahlungsquelle und dem Detektor angeordnet ist;
    - einen Detektor (30), der dazu ausgestaltet ist, eine ionisierende elektromagnetische Strahlung zu detektieren und ein Spektrum ($S$) der detektierten Strahlung zu bilden;
    - einen Prozessor (40), der dazu ausgestaltet ist, die vom Detektor gebildeten Spektren aufzunehmen und die Schritte c) bis e) eines Verfahrens nach einem der Ansprüche 6 bis 12 durchzuführen, wobei der Prozessor mit einem Speicher verbunden ist, der mindestens einen Korrekturfaktor ($f_{n_k}(E_k)$) umfasst, der für mindestens ein Energieband bestimmt wird, wobei der Korrekturfaktor nach einem der Ansprüche 1 bis 5 bestimmt wird.

**Claims**

1.  Method for calibrating a device (1) for analysing an object, the analysing device comprising:

    - a radiation source (10) configured to emit ionizing radiation (12) when it is supplied with a supply current;
    - a detector (30) configured to detect ionizing radiation and to form therefrom an energy spectrum ($S$), the energy spectrum being defined in a plurality of energy bins ($E_k$);

    the calibrating method comprising the following steps:

i) supplying the radiation source (10) with a nominal supply current (13) of nominal magnitude (*I*) and forming, with the detector, a nominal full-flux spectrum ($S_{0;1}$);

ii) supplying the radiation source with a supply current of rank *n* (13*n*), the magnitude (*nI*) of which is *n* times the nominal magnitude, *n* being a strictly positive real number and strictly lower than 1, and forming, with the detector, a full-flux spectrum of rank *n* ($S_{0;n}$);

iii) comparing the nominal full-flux spectrum with the full-flux spectrum of rank *n*, so as to obtain a spectral attenuation of rank *n* (*att$_n$*), the comparison being performed by applying a comparison function $\left(-\ln\left(\frac{S_{0;n}}{S_{0;1}}\right)\right)$ to the nominal full-flux spectrum and to the full-flux spectrum of rank *n*;

iv) in at least one energy bin ($E_k$), comparing the value of the spectral attenuation of rank *n* (*att$_n$*) with a theoretical attenuation value $\left(att_n^{th}\right)$, which is obtained on the basis of the real number *n*, and determining a correction factor ($f_n(E_k)$) associated with the value of the spectral attenuation and with the energy bin.

2. Method according to Claim 1, wherein, in step iv), the theoretical attenuation is obtained by applying the comparison function $\left(-\ln\left(\frac{n}{1}\right)\right)$ to the integer 1 and to the real number *n*.

3. Method according to either one of the preceding claims, wherein the comparison function compares two quantities and comprises:

   - a ratio between two compared quantities;
   - or a logarithm of a ratio between two compared quantities.

4. Method according to any one of the preceding claims, comprising repeating steps ii) to iv) taking into account various values of *n*, so as to obtain, for each value of *n*, a set of correction factors ($f_n(E_k)$) respectively defined for at least one energy bin ($E_k$).

5. Method according to Claim 4, comprising, in a given energy bin ($E_k$), interpolating two correction factors respectively associated with two different ranks or two different attenuation values.

6. Method for analysing an object, using an analysing device comprising:

   - a radiation source (10) configured to emit ionizing radiation (12) when it is supplied with a supply current;
   - a detector (30) configured to detect ionizing radiation and to form therefrom an energy spectrum (*S*), the energy spectrum being defined in a plurality of energy bins;

   the analysing method comprising the following steps:

   a) irradiating the object (20) with the radiation source, the radiation source being supplied with a nominal supply current (13) of nominal magnitude (*I*);
   b) detecting, with the detector (30), radiation (14) transmitted by the object, and forming an energy spectrum (*S*) from the detected radiation;
   c) taking into account a full-flux spectrum ($S_0$) formed by the detector when no object is placed between the source and the detector, the source being supplied with the nominal supply current (13);
   d) in at least one energy bin ($E_k$), selecting a correction factor ($f_{n_k}(E_k)$) resulting from the calibrating method according to any one of Claims 1 to 5;
   e) defining a spectral function (*att$^c$*($E_k$), $S^c(E_k)$) representative of the object, in at least the energy bin, the spectral function being obtained on the basis:

      - of the spectrum (*S*) formed in step b);
      - and of the full-flux spectrum ($S_0$) taken into account in step c);
      - and of the correction factor ($f_{n_k}(E_k)$) selected in step d) in at least the energy bin.

7. Method according to Claim 6, wherein, in step e), the spectral function representative of the object is a spectral attenuation function ($att^c(E_k)$) of the object, comprising a comparison function defined on the basis of the spectrum ($S$) formed in step b) and of the full-flux spectrum ($S_0$) taken into account in step c), the comparison function being multiplied by the correction factor ($f_{n_k}(E_k)$) selected in step d).

8. Method according to Claim 6, wherein, in step d), the spectral function ($S^c$) representative of the object is established on the basis of a ratio between:

   - the spectrum ($S$) formed in step b), raised to an exponent equal to the correction factor ($f_{n_k}(E_k)$) selected in step d);
   - the full-flux spectrum ($S_0$) taken into account in step c), raised to an exponent equal to the correction factor ($f_{n_k}(E_k)$) selected in step d) decreased by one.

9. Method according to any one of Claims 6 to 8, wherein step c) comprises measuring the full-flux spectrum ($S_0$), with no object placed between the radiation source (10) and the detector (30).

10. Method according to any one of Claims 6 to 9, wherein step d) comprises taking into account a spectral attenuation *(att)*, the spectral attenuation comprising a ratio between:

    - the spectrum ($S$) formed in step b);
    - and the full-flux spectrum ($S_0$) taken into account in step c);

    such that the correction factor is selected depending on the value, in the energy bin in question, of the spectral attenuation.

11. Method according to Claim 10, wherein step d) comprises measuring the spectral attenuation (*att*) on the basis of a ratio between:

    - the spectrum ($S$) formed in step b);
    - and the full-flux spectrum ($S_0$) taken into account in step c).

12. Method according to Claim 10, wherein the spectral attenuation is determined a priori.

13. Device for characterizing an object (20), comprising:

    - a radiation source (10) configured to emit ionizing electromagnetic radiation;
    - a holder (20s) intended to receive the object, such that the object is placed between the radiation source and the detector;
    - a detector (30) configured to detect ionizing electromagnetic radiation and to form a spectrum ($S$) from the detected radiation;
    - a processor (40) configured to receive the spectra formed by the detector and to implement steps c) to e) of a method according to any one of Claims 6 to 12, the processor being connected to a memory containing at least one correction factor ($f_{n_k}(E_k)$) determined for at least one energy bin, the correction factor being determined according to any one of Claims 1 to 5.

**Fig. 1A**

**Fig. 1B**

**Fig. 2A**

**Fig. 2B**

**Fig. 3A**

**Fig. 3B**

91

↓

92 ⟵ 90

$S_{0,1}$ ↓

93

↓

94

$S_{0,n}$ ↓

95

$att_n$ ↓

96

$f_n(E_k)$ ↓

97

↓

98

100

↓

110

$S$ ↓

120 ⟵ $S_0$

$S_0$ ↓

130

$att$ ↓

140

$S^c(E_k)$ | $att^c(E_k)$

**Fig. 4A**

20

**Fig. 4B**

**Fig. 4C**

**Fig. 4D**

**Fig. 5A**

**Fig. 5B**

**Fig. 6A**

**Fig. 6B**

**EP 3 654 067 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060013359 A